(19) Europäisches Patentamt
European Patent Office
Office européen des brevets

(11) **EP 2 068 305 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(51) Int Cl.:
***G10L 15/02*** *(2006.01)*

(21) Anmeldenummer: 08167246.1

(22) Anmeldetag: **22.10.2008**

(54) **Verfahren zur Spracherkennung**

Speech recognition method

Procédé destiné à la reconnaissance vocale

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.11.2007 DE 102007056221**

(43) Veröffentlichungstag der Anmeldung:
**10.06.2009 Patentblatt 2009/24**

(73) Patentinhaber: **Siemens AG Österreich**
**1210 Wien (AT)**

(72) Erfinder: **Tschirk, Wolfgang**
**1150 Wien (AT)**

(74) Vertreter: **Maier, Daniel Oliver**
**Siemens AG**
**Postfach 22 16 34**
**80506 München (DE)**

(56) Entgegenhaltungen:
**US-A- 4 432 096**

- **RAVINDRAN S ET AL: "Speech recognition using filter-bank features" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003; [ASILOMAR CONFERENCE ON SIGNALS, SYSTEMS AND COMPUTERS], NEW YORK, NY : IEEE, US, Bd. 2, 9. November 2003 (2003-11-09), Seiten 1900-1903, XP010703021 ISBN: 978-0-7803-8104-9**

**Beschreibung**

**Technisches Gebiet**

Die Erfindung betrifft ein Verfahren zur Spracherkennung, wobei zur Ausführung des Verfahrens nur geringe Rechenleistung erforderlich ist.

**Stand der Technik**

Spracherkennungssysteme benötigen einen signifikanten Aufwand an Rechenleistung und Speicherplatz. Für die Implementierung in Personal Computern (PC) und unabhängigen Computersystemen (embedded systems) stehen erst seit einigen Jahren ausreichend schnelle Prozessoren zur Verfügung, welche die für die üblichen Spracherkennungsalgorithmen erforderlichen schnellen Multiplikationsfunktionen bieten. Auch kleine batteriebetriebene Geräte (z.B. Mobiltelephone) können schon mit einfachen Spracherkennungssystemen ausgerüstet werden, beispielsweise zur Wahl per Spracheingabe, da die Rechenleistung der in diesen Geräten eingesetzten Prozessoren dafür ausreichend ist und genügend Speicherplatz zur Verfügung steht.

Die zur Spracherkennung aufzuwendende Rechenleistung ist bereits bei sehr einfachen Aufgaben markant, beispielsweise benötigt ein Spracherkennungssystem mit einem Wortschatz von 10 Worten eine Rechenleistung von 5 bis 20 Millionen Instruktionen pro Sekunde (MIPS), einen Programmspeicherbedarf von 5 bis 50kByte und einen Arbeitsspeicher von 1 bis 5kByte. Diese Anforderungen stellen für moderne Mobiltelephone keine Schwierigkeiten dar, da deren Prozessoren einige 100 MIPS leisten und Programm- und Arbeitsspeicher einige MByte umfassen.

Steht jedoch nur sehr geringe Rechenleistung zur Verfügung, können Spracherkennungssysteme nach dem Stand der Technik nicht eingesetzt werden. Beispielsweise können die in digitalen Hörhilfen (Hörgeräten) eingesetzten Prozessoren keinesfalls herkömmliche Spracherkennungsalgorithmen umsetzen, da ihre Rechenleistung typischerweise 1 MIPS beträgt und etwa 1kByte Programmspeicher und 100Byte Arbeitsspeicher zur Verfügung stehen.

Es ist nicht möglich, für die Sprachsteuerung von Hörhilfen andere, leistungsfähigere Prozessoren einzusetzen, da diese die zur Verfügung stehende Energieversorgung (üblicherweise Miniaturbatterien) zu rasch entleeren würden. Die in digitalen Hörhilfen eingesetzten Prozessoren bieten die für Spracherkennungssysteme gemäß dem Stand der Technik erforderlichen schnellen Multiplikationsfunktionen nicht, da diese für die in digitalen Hörhilfen erforderlichen Funktionalitäten nicht erforderlich sind.

Weitere Verfahren zur Spracherkennung, beispielsweise das in US2006/0136207 beschriebene Verfahren wenden sogenannte Support Vector Machines (SVM) oder Classification and Regression Trees (CART) an, welche jedoch einen hohen Bedarf an Speicherplatz und Rechenleistung aufweisen.

Ein Spracherkenner, welcher linear prädiktive cepstrale Merkmale mittels Hidden-Markow-Modellen klassifiziert ist in EP1041540 beschrieben. Dieses Verfahren erfordert ebenso einen hohen Aufwand an Speicherplatz und Rechenleistung und benötigt sehr viele Trainingsdaten.

Die Aufgabe, die Einstellungen eines Hörgeräts automatisch mittels Analyse der Umgebungsgeräusche vorzunehmen, wird mit einem in WO2001022790 beschriebenen Verfahren gelöst, wobei ein Hidden-Markow-Modell zur Anwendung kommt.

Im Artikel "Speech recognition using filter-bank features", Ravindran S, ASILOMAR CONFERENCE ON SIGNALS, SYSTEMS, & COMPUTERS 2003, wird vorgeschlagen, die verbreiteten MFCC-Merkmale durch Filterbank-Merkmale zu ersetzen, um Energie einzusparen.

**Darstellung der Erfindung**

Der Erfindung liegt die Aufgabe zugrunde, ein Verfahren zur Spracherkennung anzugeben, wobei zur Ausführung des Verfahrens nur geringe Rechenleistung erforderlich ist.

Die Aufgabe wird durch ein Verfahren gelöst, welches mittels eines Mustererkenners aus einem Eingangsmuster durch Vergleich mit gespeicherten Mustern aller erkennbaren Wörter eine Reihung der Wörter nach der Trefferwahrscheinlichkeit erstellt und das Eingangsmuster dadurch erstellt wird, dass

- das digitalisierte Spracheingangssignal mittels einer Bandfilterbank in mehrere Frequenzkanäle m aufgeteilt wird, und
- Musterelemente $p_{fb}$, welche aus den digitalen Sprachsamples jedes Frequenzbereichs b, bestehend aus W benachbarten Frequenzkanälen m, über einen zeitlichen Summierungsbereich f, bestehend aus L benachbarten Zeitpunkten t gemäß

$$p_{fb} = \begin{cases} 0 & \text{für} \quad u_{fb} \leq u_{min} \\ \ln^2(u_{fb}/u_{min}) & \text{für} \quad u_{fb} > u_{min} \end{cases}$$

bestimmt werden, wobei

$$u_{fb} = \sum_{t=fL+1}^{fL+L} \sum_{m=bW+1}^{bW+W} |s_{tm}|$$

und wobei $|s_{tm}|$ den Betrag des Signalabtastwertes eines Kanals m zum Zeitpunkt t darstellt und wobei $u_{min}$ einen beliebig zu wählenden Wert darstellt.

Der in diesem Verfahren einzusetzende Mustererkenner kann beliebig gewählt werden, die vorteilhaften Eigenschaften der gegenständlichen Erfindung sind unabhängig von dem gewählten Mustererkenner. Es bietet sich an, bestehende Spracherkenner mit dem gegenständlichen Verfahren auszurüsten.

Mit dem erfindungsgemäßen Verfahren ist der Vorteil erzielbar, dass auch mit Prozessoren mit geringer Rechenleistung ein Spracherkenner aufgebaut werden kann.

Ein weiterer wichtiger Aspekt der Erfindung ist es, dass zur Ausführung des erfindungsgemäßen Verfahren der das Verfahren ausführende Prozessor keine Multiplikationsfunktion besitzen muß.

Besonders für batteriebetriebene Geräte, z.B. Hörgeräte (Hörhilfen) ist der Einsatz der Erfindung zweckmäßig, da die in solchen Geräten verwendeten Prozessoren (Recheneinheiten) oft nur mit großem programmiertechnischem Aufwand Multiplikationen realisieren können und der für diese Multiplikationen erforderliche Zeitraum zu lange ist, um einen konventionellen Spracherkenner zu realisieren.

## Kurzbeschreibung der Zeichnungen

Es zeigen beispielhaft und schematisch:

**Fig. 1** Blockschaltbild eines Spracherkenners
**Fig. 2** Gewinnung der Musterelemente $p_{fb}$
**Fig. 3** Blockschaltbild eines Pattern Endpoint Detektors PED

## Ausführung der Erfindung

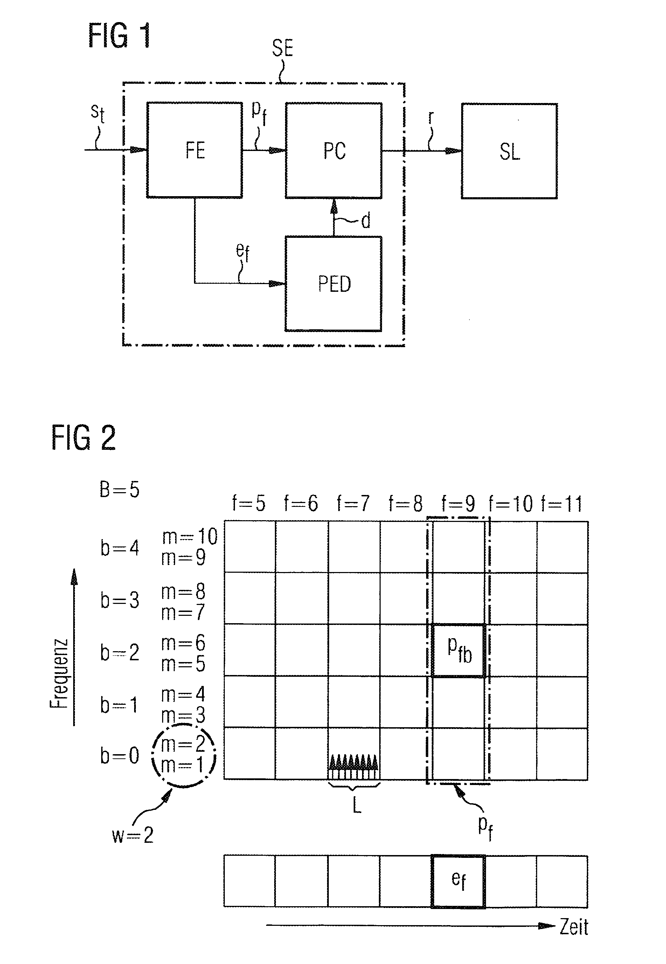

In **Fig.1** ist beispielhaft und schematisch ein Spracherkenner SE dargestellt, dieser Spracherkenner umfasst eine Feature Extraktion FE, eine Pattern Classifikation PC und eine Pattern Endpoint Detection PED. Dieser Spracherkenner SE liefert als Ausgang jedes Spracherkennungsvorgangs eine Rangliste r aller erkennbaren Wörter, gereiht nach deren jeweiliger Wahrscheinlichkeit. Diese Rangliste r dient als Eingangssignal einer Steuerlogik SL, welche auf Basis der Rangliste r die weitere Verarbeitung oder Analyse der erkannten Wörter durchführt.

Das das Eingangssignal des Spracherkenners bildende Audiosignal $s_t$ wird von der Feature Extraction FE herangezogen, um aus diesem Audiosignal $s_t$ Musterelemente $p_f$ über zeitliche Summierungsbereiche zu bestimmen, welche als Eingangsgröße der Pattern Classification PC (Mustererkenner) dienen. Weiters bestimmt die Feature Extraction FE aus dem Audiosignal $s_t$ ein Energieäquivalent $e_f$, welches als Eingangsgröße der Pattern Endpoint Detection PED (Wortende-Detektor) dient. Diese Pattern Endpoint Detection PED gibt, nachdem sie das Ende eines Wortes erkannt hat, das Wortende-Signal d an die Pattern Classification PC ab.

**Fig. 2** stellt beispielhaft und schematisch die Bestimmung der Musterelemente $p_{fb}$ und der Musterelemente über einen zeitlichen Summierungsbereich $p_f$ dar. Die waagrechte Achse stellt die Zeit dar, die senkrechte Achse die Frequenz. Ein zeitlich diskretes (digitalisiertes) Spracheingangssignal wird mittels einer (nicht dargestellten) Bandfilterbank in Frequenzkanäle m aufgeteilt. Es wird jeweils eine Anzahl W benachbarter Frequenzkanäle m zu Frequenzbereichen b zusammengefasst. Im gegenständlichen Beispiel ist die Anzahl der Frequenzkanäle 10, die Anzahl W benachbarter Frequenzkanäle, welche zu Frequenzbereichen zusammengefasst werden, beträgt 2 und somit bestehen in diesem Beispiel 5 Frequenzbereiche b.

Weiters werden die Signale (Samplingwerte) aller Frequenzkanäle über eine Anzahl an Abtastwerten L zusammengefasst und somit gemäß

$$p_{fb} = \begin{cases} 0 & \text{für} \quad u_{fb} \leq u_{min} \\ \ln^2(u_{fb}/u_{min}) & \text{für} \quad u_{fb} > u_{min} \end{cases}$$

die Musterelemente $p_{fb}$ bestimmt. Die Größe $u_{min}$ stellt einen beliebig zu wählenden Wert dar, wobei konkrete Werte von $u_{min}$ in Rahmen der Ausführung des erfindungsgemäßen Verfahrens und während der Anpassung des Spracherkenners auf spezifische Einsatzgebiete festgelegt wird.

Die zur Bestimmung der Musterelemente $p_{fb}$ erforderlichen Werte von $u_{fb}$ werden gemäß

$$u_{fb} = \sum_{t=fL+1}^{fL+L} \sum_{m=bW+1}^{bW+W} |s_{tm}|$$

bestimmt, wobei $|s_{tm}|$ den Betrag des Signalabtastwertes eines Kanals m zum Zeitpunkt t darstellt.

Die Musterelemente $p_{fb}$ eines Frequenzbereichs b und eines zeitlichen Summierungsbereichs f werden für jeweils einen zeitlichen Summierungsbereich f gemeinsam an den Mustererkenner PC (Pattern Classification) geführt und stellen für diesen Mustererkenner PC die Eingangsgröße $p_f$ dar.

Die Feature Extraction FE bestimmt weiters das Energieäquivalent $e_f$ eines zeitlichen Summierungsbereichs f gemäß

$$e_f = \begin{cases} 0 & \text{für} \quad u_f \leq u_{min} \\ \ln^2(u_f/u_{min}) & \text{für} \quad u_f > u_{min} \end{cases}$$

wobei

$$u_f = \sum_{b=0}^{B-1} u_{fb}.$$

wobei $u_{min}$ einen beliebig zu wählenden Wert darstellt.

Dieses Energieäquivalent $e_f$ eines zeitlichen Summierungsbereichs f dient als Eingangsgröße der Pattern Endpoint Detection PED (Wortende-Detektor).

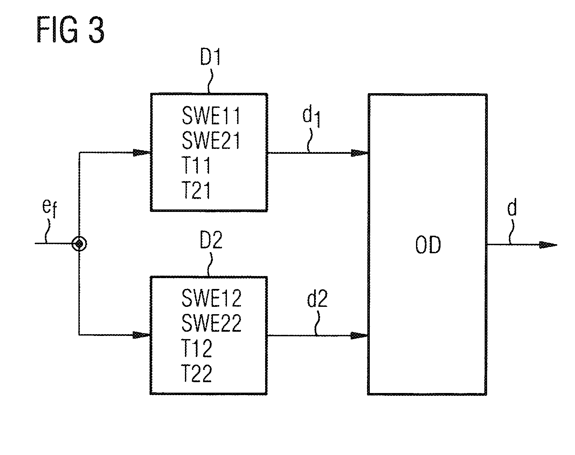

In **Fig. 3** ist das Blockschaltbild einer Pattern Endpoint Detektion PED (Wortende-Detektor) dargestellt. Die Pattern Endpoint Detektion PED umfasst 2 Wortende-Detektoren D1 und D2, welche beide als Eingangssignal das Energieäquivalent $e_f$ eines zeitlichen Summierungsbereichs f erhalten und im Fall, dass ein Wortende erkannt wird, jeweils ein Wortende-Signal d1, d2 mit dem Wert "true" an die logische Oder-Verknüpung OD abgeben. Diese logische Oder-Verknüpfung OD erstellt mittels logischer Oder-Verknüpfung aus den beiden Wortende-Signalen d1, d2 das Wortende-Signal d, welches an die Pattern Classification PC geleitet wird.

Jeder Wortende-Detektor D1 oder D2 führt jeweils ein identisches Verfahren zur Erkennung eines Wortendes aus, wobei die Parameter des Verfahrens, bestehend aus einem ersten Schwellwert SWE11, SWE21 und einem zweiten Schwellwert SWE12, SWE22, einem ersten Zeitraum T11, T12 und einem zweiten Zeitraum T21, T22 bei beiden Wortende-Detektoren D1, D2 unterschiedlich sind.

Die Erkennung eines Wortendes durch die Wortende-Detektoren D1 und D2 erfolgt mittels Vergleichs des Wertes des Energieäquivalents $e_f$ mit den Schwellwerten SWE11, SWE21, SWE12 und SWE22, wobei nachdem der Wert des Energieäquivalents $e_f$ länger als ein erster Zeitraum T11 bzw. T12 größer als der erste Schwellwert SWE11 bzw. SWE12 und danach für mindestens die Dauer eines zweiten Zeitraums T21 bzw. T22 niedriger als der zweite Schwellwert SWE21 bzw. SWE22 ist, ein ein Wortende-Signal d1, d2 erzeugt wird.

**Liste der Bezugszeichen**

| | |
|---|---|
| SE | Spracherkenner |
| FE | Feature Extraktion |
| PC | Pattern Classification |
| PED | Pattern Endpoint Detektion |
| SL | Steuerlogik |
| $s_t$ | Audiosignal zum Zeitpunkt t |
| $p_f$ | Musterelement des zeitlichen Summierungsbereichs f |
| $e_f$ | Energieäquivalent des zeitlichen Summierungsbereichs f |
| r | Rangliste |
| d | Wortende-Signal |
| d1 | Wortende-Signal des Wortende-Detektors D1 |
| d2 | Wortende-Signal des Wortende-Detektors D2 |
| b | Frequenzbereich |
| B | Anzahl Frequenzbereiche |
| m | Frequenzkanal |
| W | Anzahl benachbarter Frequenzkanäle |
| f | zeitlicher Summierungsbereich |
| L | Abtastwerteanzahl im zeitlichen Summierungsbereich f |
| $p_{fb}$ | Musterelement des zeitlichen Summierungsbereichs f und Frequenzbereichs b |
| t | Zeitpunkt |
| D1, D2 | Wortende-Detektoren |
| SWE11 | erster Schwellwert des Wortende-Detektors D1 |
| SWE21 | zweiter Schwellwert des Wortende-Detektors D1 |
| SWE12 | erster Schwellwert des Wortende-Detektors D2 |
| SWE22 | zweiter Schwellwert des Wortende-Detektors D2 |
| T11 | Erster Zeitraum des Wortende-Detektors D1 |
| T21 | Zweiter Zeitraum des Wortende-Detektors D1 |
| T12 | Erster Zeitraum des Wortende-Detektors D2 |
| T22 | Zweiter Zeitraum des Wortende-Detektors D2 |
| $e_f$ | Energieäquivalent |
| OD | logische Oder-Vernküpfung |

**Patentansprüche**

1. Verfahren zur Spracherkennung, welches mittels eines Mustererkenners aus einem Eingangsmuster durch Vergleich mit gespeicherten Mustern aller erkennbaren Wörter eine Reihung der Wörter nach der Trefferwahrscheinlichkeit erstellt und das Eingangsmuster **dadurch** erstellt wird, dass

   - das digitalisierte Spracheingangssignal mittels einer Bandfilterbank in mehrere Frequenzkanäle m aufgeteilt wird, und
   - Musterelemente $p_{fb}$, welche aus den digitalen Sprachsamples jedes Frequenzbereichs b, bestehend aus W benachbarten Frequenzkanälen m, über einen zeitlichen Summierungsbereich f, bestehend aus L benachbarten Zeitpunkten gemäß

$$p_{fb} = \begin{cases} 0 & \text{für} \quad u_{fb} \leq u_{min} \\ \ln^2(u_{fb}/u_{min}) & \text{für} \quad u_{fb} > u_{min} \end{cases}$$

bestimmt werden, wobei

$$u_{fb} = \sum_{t=fL+1}^{fl+L} \sum_{m=bW+1}^{bW+W} |s_{tm}|$$

und wobei $|s_{tm}|$ den Betrag des Signalabtastwertes eines Kanals m zum Zeitpunkt t darstellt und wobei $u_{min}$ einen beliebig zu wählenden Wert darstellt.

2. Verfahren gemäß Anspruch 1, **dadurch gekennzeichnet, dass** eine Wortende-Detektion vorgesehen ist, welche durch logische Oder-Verknüpfung der binären Ausgangssignale zweier Wortende-Detektoren D1, D2 das Ende eines Wortes bestimmt, wobei ein Energieäquivalent $e_f$ gemäß

$$e_f = \begin{cases} 0 & \text{für} \quad u_f \leq u_{min} \\ \ln^2(u_f/u_{min}) & \text{für} \quad u_f > u_{min} \end{cases}$$

bestimmt und als Eingangsgröße der Wortende-Detektoren D1, D2 herangezogen wird, wobei

$$u_f = \sum_{b=0}^{B-1} u_{fb}$$

und wobei $u_{min}$ einen beliebig zu wählenden Wert darstellt und b einen Frequenzbereich, bestehend aus W benachbarten Frequenzkanälen m darstellt und B die Anzahl an Frequenzbereichen darstellt, und wobei die Wortende-Detektoren D1, D2 das Ende eines Wortes durch Vergleich des Energieäquivalents $e_f$ mit Schwellwerten SWE11, SWE12, SWE21 und SWE22 vornehmen, und, dass nachdem der Wert des Energieäquivalents $e_f$ länger als ein erster Zeitraum T11, T12 größer als der erste Schwellwert SWE11, SWE12 und danach für mindestens die Dauer eines zweiten Zeitraums T21, T22 niedriger als der zweite Schwellwert SWE21, SWE22 ist, ein Wortende erkennen.

3. Verfahren gemäß Anspruch 2, **dadurch gekennzeichnet, dass** die ersten Zeiträume T11, T12, die zweiten Zeiträume T21, T22 und die Schwellwerte SWE11, SWE12, SWE21 und SWE22 der beiden Wortende-Detektoren D1, D2 unterschiedlich sind.

4. Verfahren nach einem der Ansprüche 1 bis 3, **dadurch gekennzeichnet, dass** das Verfahren in einer Hörhilfe eingesetzt wird.

**Claims**

1. Speech recognition method which creates a sequence of words on a probability basis from an input pattern by means of a pattern recogniser by comparison with stored patterns of all the recognisable words, said input pattern being created by

- splitting the digitised speech input signal into a plurality of frequency channels m by means of a bandpass filter bank, and
- pattern elements $p_{fb}$ which are determined from the digital speech samples of each frequency range b, consisting of W adjacent frequency channels m, over a time summation range f, consisting of L adjacent instants, according to

$$p_{fb} = \begin{cases} 0 & \text{for} \quad u_{fb} \leq u_{min} \\ \ln^2(u_{fb}/u_{min}) & \text{for} \quad u_{fb} > u_{min} \end{cases}$$

where

$$u_{fb} = \sum_{t=fL+1}^{fL+L} \sum_{m=bW+1}^{bW+W} |s_{tm}|$$

and where $|S_{tm}|$ represents the absolute value of the signal sample of a channel m at instant t and where $u_{min}$ is a randomly selected value.

2. Method according to claim 1, **characterised in that** word end detection is provided which determines the end of a word by logical ORing of the binary output signals of two word end detectors D1, D2, the energy equivalent $e_f$ being determined according to

$$e_f = \begin{cases} 0 & \text{for} \quad u_f \leq u_{min} \\ \ln^2(u_f/u_{min}) & \text{for} \quad u_f > u_{min} \end{cases}$$

and used as the input variable of the word end detectors D1, D2, where

$$u_f = \sum_{b=0}^{B-1} u_{fb}$$

and where $u_{min}$ is a randomly selected number and b represents a frequency range, consisting of W adjacent frequency channels m, and B the number of frequency ranges, and wherein the word end detectors D1, D2 perform end of word [detection] by comparing the energy equivalent $e_f$ with threshold values SWE11, SWE12, SWE21 and SWE22, and recognise a word end once the value of the energy equivalent $e_f$ is longer than a first time period T11, T12, greater than the first threshold value SWE11, SWE12 and then lower than the second threshold value SWE21, SWE22 for at least the duration of a second time period T21, T22.

3. Method according to claim 2, **characterised in that** the first time periods T11, T12, the second time periods T21, T22 and the threshold values SWE11, SWE12, SWE21 and SWE22 of the two word end detectors D1, D2 are different.

**4.** Method according to one of claims 1 to 3, **characterised in that** the method is used in a hearing aid.

**Revendications**

**1.** Procédé de reconnaissance vocale qui établit un alignement des mots selon la probabilité de résultats positifs au moyen d'un reconnaisseur d'échantillons à partir d'un échantillon d'entrée par comparaison avec des échantillons stockés de tous les mots reconnaissables, l'échantillon d'entrée étant créé par

    - séparation du signal vocal d'entrée numérisé en plusieurs canaux de fréquences m au moyen d'un banc de filtres passe-bande et
    - détermination d'éléments d'échantillons $p_{fb}$ à partir des échantillons vocaux numériques de chaque plage de fréquences b, composée de W canaux de fréquences voisins m, sur une plage de totalisation temporelle f, composée de L points temporels voisins, selon

$$p_{fb} = \begin{cases} 0 & \text{pour } u_{fb} \leq u_{min} \\ \ln^2(u_{fb}/u_{min}) & \text{pour } u_{fb} > u_{min} \end{cases}$$

avec

$$u_{fb} = \sum_{t=fL+1}^{fL+L} \sum_{m=bW+1}^{bW+W} |s_{tm}|$$

et $|S_{tm}|$ étant la valeur absolue de la valeur d'échantillonnage du signal d'un canal m à l'instant t et $u_{min}$ étant une valeur à choisir au choix.

**2.** Procédé selon la revendication 1, **caractérisé en ce qu'**est prévue une détection de fin de mot qui détermine la fin d'un mot par une liaison OU logique entre les signaux de sortie binaires de deux détecteurs de fins de mots D1, D2, un équivalent d'énergie $e_f$ étant déterminé selon

$$e_f = \begin{cases} 0 & \text{pour } u_f \leq u_{min} \\ \ln^2(u_f/u_{min}) & \text{pour } u_f > u_{min} \end{cases}$$

et étant utilisé en tant que grandeur d'entrée des détecteurs de fins de mots D1, D2, avec

$$u_f = \sum_{b=0}^{B-1} u_{fb}$$

et $u_{min}$ étant une valeur à choisir au choix et b étant une plage de fréquences composée de W canaux de fréquences voisins m et B étant le nombre de plages de fréquences, et les détecteurs de fins de mots D1, D2 établissant la fin d'un mot par comparaison de l'équivalent d'énergie $e_f$ avec des valeurs seuils SWE11, SWE12, SWE21 et SWE22 et reconnaissant une fin de mot après que la valeur de l'équivalent d'énergie $e_f$ est supérieure à la première valeur seuil SWE11, SWE12 pendant plus longtemps qu'une première période T11 T12 et est ensuite inférieure à la deuxième valeur seuil SWE21, SWE22 pour au moins la durée d'une deuxième période T21, T22.

3. Procédé selon la revendication 2, **caractérisé en ce que** les premières périodes T11, T12, les deuxièmes périodes T21, T22 et les valeurs seuils SWE11, SWE12, SWE21 et SWE22 des deux détecteurs de fins de mots D1, D2 sont différentes.

4. Procédé selon l'une des revendications 1 à 3, **caractérisé en ce que** le procédé est mis en oeuvre dans une aide auditive.

## FIG 1

## FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060136207 A
- EP 1041540 A
- WO 2001022790 A

**In der Beschreibung aufgeführte Nicht-Patentliteratur**

- **Ravindran S.** Speech recognition using filter-bank features. *ASILOMAR CONFERENCE ON SIGNALS, SYSTEMS, & COMPUTERS,* 2003